(19) **Europäisches Patentamt / European Patent Office / Office européen des brevets**

(11) **EP 2 594 533 A1**

(12) **EUROPEAN PATENT APPLICATION**

(43) Date of publication:
22.05.2013 Bulletin 2013/21

(21) Application number: 12190390.0

(22) Date of filing: 18.09.2009

(51) Int Cl.:
*C02F 1/52* (2006.01)   *C02F 9/00* (2006.01)
*C02F 1/66* (2006.01)   *C02F 1/56* (2006.01)
*C02F 1/38* (2006.01)   *C02F 1/00* (2006.01)
*B01D 21/26* (2006.01)

(84) Designated Contracting States:
AT BE BG CH CY CZ DE DK EE ES FI FR GB GR HR HU IE IS IT LI LT LU LV MC MK MT NL NO PL PT RO SE SI SK SM TR

(30) Priority: 19.09.2008 US 234373

(62) Document number(s) of the earlier application(s) in accordance with Art. 76 EPC:
09170675.4 / 2 165 980

(71) Applicant: **Palo Alto Research Center Incorporated**
**Palo Alto, California 94304 (US)**

(72) Inventors:
• **Lean, Meng H.**
**Santa Clara, CA California 95054 (US)**
• **Volkel, Armin R.**
**Mountain View, CA California 94040 (US)**
• **Kole, Ashutosh**
**Sunnyvale, CA California 94086 (US)**
• **Seo, Jeonggi**
**Albany, CA California 94706 (US)**

(74) Representative: **Grünecker, Kinkeldey, Stockmair & Schwanhäusser**
**Leopoldstrasse 4**
**80802 München (DE)**

Remarks:
•This application was filed on 29-10-2012 as a divisional application to the application mentioned under INID code 62.
•Claims filed after the date of filing of the application/ after the date of receipt of the divisional application (Rule 68(4) EPC).

(54) **Method and System for Seeding with Mature Floc to Accelerate Aggregation in a Water Treatment Process**

(57)   A system and method that uses mature floc as seed particles to promote aggregation in a water treatment process is provided. The seed particles do not need to be recovered as they separate out with the waste steam after a spiral separation. One implementation is to prepare the mature floc offline and inject periodically into the buffer tank, as needed. Another implementation is to tap into the more mature floc downstream and feedback, as needed, to the buffer tank.

FIG. 4

**Description**

BACKGROUND

The core elements of conventional water treatment include the sequential process steps of coagulation, flocculation, sedimentation and physical filtration. Typically, chemical coagulants are used to screen Coulomb repulsion and promote aggregation of sub-micron particulates into pin flocs.

Flocculants in the form of long chain polymers can then be added to anchor the flocs to form larger entities that settle faster in the sedimentation basin. The hydraulic retention time through the first 3 stages may be 5-10 hours, depending on the input water quality and the facility.

A transformative approach to the practice of conventional water treatment has been taught in the two related applications noted above. Features of this approach include: high scalability, modularity, small footprint, high throughput, purely fluidic, continuous flow, membrane-less, size selective cut-off, and accelerated agglomeration kinetics. The system will work with particulates of any density, including those with neutral buoyancy. These features allow reduced coagulant dosage by 50% to achieve the same turbidity reduction; which may be attributed to the compact and self-limiting narrow size distribution of pin flocs resulting from fluid shear effects. The combined effects allow for extraction of micron sized pin flocs in fluidic structures to potentially eliminate flocculation and sedimentation steps, resulting in significant savings through reduced land and chemical cost, operational overhead, and faster processing time from raw to finished water.

A major design consideration is the aggregation time to grow the pin flocs compared to the hydraulic retention time of the system For in-line pin floc formation and subsequent removal with the spiral separator, it would be preferred that the two time scales be comparable or at least the difference between these two time scales be minimized.

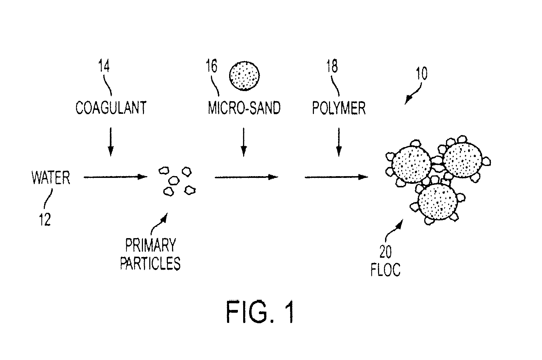

Figure 1 shows a ballasted flocculation technique used in a known commercial system, referred to as *ActiFlo* by Veolia, which solves this problem by introducing micro-sand as seed particles in the coagulation step to accelerate aggregation and sedimentation. The large 120um micro-sand provides more surface area for aggregation. The higher density of 2.65 also promotes more rapid sedimentation.

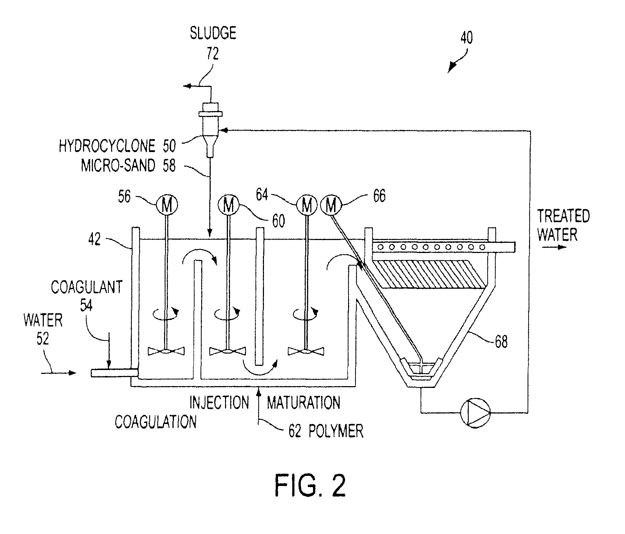

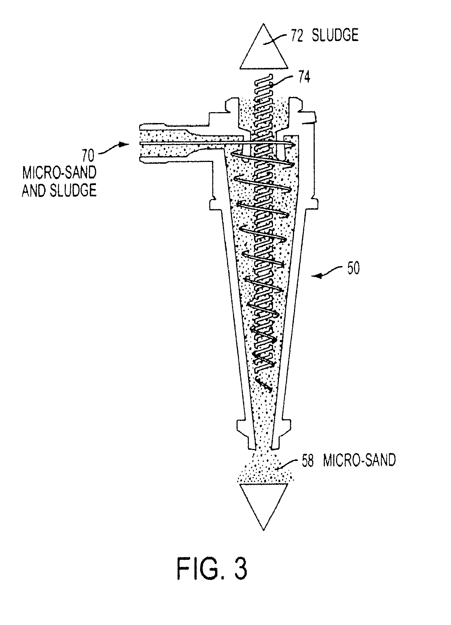

As shown, process 10 is illustrated wherein water is injected into the system (at 12) and then coagulant is added (at 14). From this combination, primary particles are formed to which micro-sand is added (at 16). Polymer material is then added (at 18) to form the floc (at 20). It should be appreciated that the particles or floc in this conventional system are attached to the micro-sand. As will be illustrated in greater detail in Figures 2 and 3, the system has a number of disadvantages. For example, the combination of primary particles and micro-sand requires feedback and recycling to remove the floc or primary particles from the micro-sand, clean the micro-sand and re-inject the micro-sand into the system for further processing. Because the recycling of the micro-sand is not 100% efficient, a steady supply of new micro-sand has to be added, which results in added cost in material and infrastructure.

Figures 2 and 3 show a schematic of the micro-sand recycling system. The system 40 includes a processing unit 42 and a hydrocyclone device 50. In operation, water 52 is injected into the system along with coagulant 54. A mixer 56 mixes the water 53 and the coagulant 54. This mixed combination then has micro-sand 58 added thereto by the hydrocyclone device 50. A mixer 60 then mixes the micro-sand 58 with the water 52 and coagulant 54 combination. A polymer 62 is then added to the mix. It is then mixed with a mixer 64 and delivered to a tank 68 of the unit 42. A mixer 66 is used to mix the material that is delivered to the tank 68 and treated water is skimmed from the top of the tank 68. Notably, the material containing the micro-sand mixture is fed back from the bottom of tank 68 through a feedback line 70 to the hydrocyclone device 50. The hydrocyclone device 50 operates to separate micro-sand 58 from sludge 72.

In this regard, with reference to Figure 3, hydrocyclone device 50 is illustrated. As shown, the device includes an inlet for feedback line 70 and outlets for sludge 72 and micro-sand 58. It should be appreciated that a threaded spiral stem 74 acts on the material to separate the sludge 72 from the micro-sand 58.

The advantage of this known technology is that process time and foot print are reduced. The disadvantages are the need to recover the micro-sand, which is granular and insoluble, using hydrocyclones and the need for additional power for the micro-sand pumps.

BRIEF DESCRIPTION

In one aspect of the presently described embodiments, the system comprises an inlet operative to receive source water having particles therein, a mixer operative to mix the source water with coagulant material, a buffer tank operative to receive an output of the mixer and receive mature floc (e.g. that are preferably at least of the cut-off size of the spiral separator), wherein the mature floc is operative to promote growth of particles in the source water (e.g. into aggregates that are at least of the cut-off size of the spiral separator), a spiral separator operative to segregate the mixture from the buffer tank into effluent and waste water having aggregated particles therein and an outlet operative to provide a first path for the effluent and a second path for the waste water having aggregated particles.

In another aspect of the presently described embodiments, the inlet comprises a mesh filter.

In another aspect of the presently described embodiments, the mixer is a spiral mixer.

In another aspect of the presently described embodiments, the system further comprises a tank for forming the mature floc.

In another aspect of the presently described embodiments, the age of the mature floc is minimized to allow optimal aggregation of small particles which is controlled by both size and concentration of the aged floc.

In another aspect of the presently described embodiments, the system further comprises a feedback line between the second path and the buffer tank.

In another aspect of the presently described embodiments, the system further comprises a filter device operative to receive and filter the effluent.

In another aspect of the presently described embodiments, the method comprises receiving source water having particles therein, adding alkalinity, mixing the source water with coagulant material, injecting mature floc into the mixture of the source water and the coagulant material, the mature floc promoting aggregation of the particles in the source water and separating the source water into effluent and waste water having aggregated particles.

In another aspect of the presently described embodiments, the mixing is spiral mixing.

In another aspect of the presently described embodiments, the mature floc is injected from a tank wherein the mature floc is generated.

In another aspect of the presently described embodiments, the separation is spiral separation.

In another aspect of the presently described embodiments, the method further comprises feeding the waste water back into the buffer tank to be injected as mature floc in the injecting step.

In another aspect of the presently described embodiments, a means is provided to implement the method.

In one embodiment of the system as set forth in claim 13 the means for separating is a spiral separator.

In a further embodiment of the system as set forth in claim 13 the system further comprises means for feeding the waste water back to the means for injecting to be injected as mature floc.

BRIEF DESCRIPTION OF THE DRAWINGS

FIGURE 1 is a representative view of prior art;

FIGURE 2 is a representative view of prior art;

FIGURE 3 is a representative view of prior art;

FIGURE 4 is a representative view of a system according to the presently described embodiments;

FIGURE 5 is a representation of data generated according to the presently described embodiments;

FIGURE 6 is a representative view of a system according to the presently described embodiments;

FIGURE 7 is a representation of data generated according to the presently described embodiments;

FIGURE 8 is a representation of data generated according to the presently described embodiments;

FIGURE 9 is a representative view of a spiral device incorporated into the presently described embodiments; and,

FIGURE 10 is a view of a spiral device incorporated into the presently described embodiments.

DETAILED DESCRIPTION

The presently described embodiments are directed to a system and method that circumvent the micro-sand used by the previously described system by introducing mature floc (such as floc that is processed, e.g., for approximately 30 minutes or less) as seed particles to promote aggregation of smaller pin flocs, which are formed soon after mixing of source water and coagulant. It should be understood that the mature floc typically are large aggregates that are either extracted or recycled from the waste stream of the spiral separator or generated in another tank from coagulant and organic and/or inorganic nano-particles, for example, those that are naturally occurring in source waters. As such, the seed particles do not need to be recovered as they separate out with the waste stream after spiral separation. The additional chemicals to form the seed floc can be off-set by the 50% reduction in chemical dosage for coagulation. One implementation method is to prepare the mature floc off-line and inject periodically into the buffer tank as needed. Another embodiment is to feedback the more mature downstream floc as needed to the buffer tank. Mature floc may take a variety of forms as it is a function of relative age and the system into which it is implemented. In one form contemplated herein, mature floc has a size above the cut-off size of a spiral separator used in the process. As a point of reference, flocs above the cut-off size have dimensions such that they will be taken out of the separator in the waste stream. Also, for at least some applications contemplated herein, 30 minutes of maturing is sufficient; however, shorter durations are obtainable and often desired. For example, floc maturing for 4 minutes is sufficient for some applications. In this regard, in at least some forms, the age of the mature floc is minimized to allow optimal aggregation of small particles which is controlled by both size and concentration of aged floc.

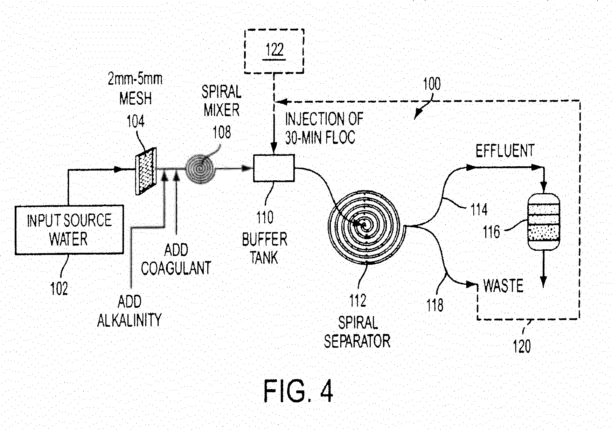

Figure 4 shows a schematic of a water treatment system using spiral separation according to the presently described embodiments. Alkalinity is added in-line in the form of a base just before the coagulant. This is to adjust the pH of the source water throughout the process. Coagulant is introduced prior to mixing in a spiral mixer, followed by mature floc injection into the buffer tank prior to spiral separation and extraction of the flocs. This basic technique allows for the objectives of the presently described embodiments to be achieved.

In this regard, an exemplary system 100 according to the presently described embodiments is illustrated. The system 100 receives source water at a suitable inlet (shown representatively) from an input water source 102 that is, in one form, flowed through a mesh filter 104. It should be appreciated that the mesh filter 104 is designed to filter out relatively large particles from the input water. In this regard, the filter 104 may be formed of a 2mm - 5mm mesh material. In at least one form, alkalinity is added in the form of a base to the input water after filtering by the mesh filter 104 to adjust for the pH. Any suitable base may be used. In at least one form, coagulant may be added to the input water after the base is added. Any suitable coagulant may be used.

The system 104 also includes a mixer 108, e.g. a spiral mixer that receives the input water and the coagulant. The spiral mixer shown in Figure 4 serves a dual purpose. First, it provides the flash mixing function where the incoming fluid is angled at the inlet to cause chaotic mixing when it impinges on the lower wall of the spiral channel. Secondly, the high shear driven flow in the channel is designed to achieve a shear rate which limits the rapid growth of loose floc. The resulting floc is dense and uniform within a narrow size range. This dense uniformly sized floc ensures rapid aggregation. The mixer 108 has an output that connects to a buffer tank 110. The mixer 108 may take a variety of forms; however, in one form, the noted spiral mixer is used. Buffer tank 110 is also positioned to receive an injection of mature floc. Various forms of mature floc may be used; however, flocs that are at least of the cut-off size of the spiral separator are most desirable, since they will be effectively removed by the spiral separator, for example, in the waste stream, and any particulates from the source water that aggregate onto one of these mature flocs are also removed. In at least one form, floc that has matured for approximately 30 minutes is used provided they are effective in accelerating aggregation to pin floc size. The aggregation rate of small particles can be controlled by the concentration and size of the added mature floc

The output of the buffer tank 110 is connected to a spiral separator 112 which has an effluent output 114. The effluent output 114 directs effluent separated out from the fluid input to the spiral separator to further filtering mechanism 116. The output of the mechanism 116 typically comprises the treated water that may be used in a variety of ways. The spiral separator 112 has a second output line 118 upon which waste water travels. The waste water can be disposed of in appropriate manners or recirculated within the system along a feedback line 120. It should be appreciated that the feedback line 120 is optional to the system; however, in one form, the feedback line 120 provides feedback of the waste water to be reinjected into the system as mature floc. As an alternative to the feedback line 120, mature floc can be generated in a tank 122 and injected into the buffer tank 110. It should also be appreciated that a combination of these approaches can be implemented in any one system.

The spiral separator 112 may take a variety of forms, However, in at least some forms, the separator operates as the spiral separator described, for example, in U.S. Publication No. 2008/0128331 A1, having U.S. Serial No. 11/606,460, filed on November 20, 1006 and entitled "Particle Separation and Concentration System," U.S. Serial No. 111936,729, filed on November 7, 2007 and entitled "Fluidic Device and Method for Separation of Neutrally Buoyant Particles," and U.S. Serial No. 11/936,753, filed on November 7, 2007 and entitled "Device and Method for Dynamic Processing in Water Purification," all of which are incorporated herein in their entirety by this reference.

In this regard, the presently described embodiments use a spiral separator that uses the curved channel of a spiral device to introduce a centrifugal force upon particles such as neutrally buoyant particles (e.g. particles having substantially the same density as water, or the fluid in which the particles reside) flowing in a fluid, e.g. water, to facilitate improved separation of such particles from the fluid. It should be understood that, because the mature floc is organic, soluble, and non-granular in nature, the techniques for separating neutrally buoyant particles are particularly useful here. However, other separation techniques are contemplated as well. For example, some of these techniques utilize various forces generated in the flow of the fluid in the spiral channel to separate particles as a function of, for example, geometry of the channel and velocity. These forces include centrifugal forces and pressure driven forces, among others.

In the case of neutrally buoyant particles, as such particles flow through the channel, a tubular pinch effect causes the particles to flow in a tubular band. The introduced centrifugal force perturbs the tubular band (e.g. forces the tubular band to flow in a manner offset from a center of the channel), resulting in an asymmetric inertial migration of the band toward the inner wall of the channel. This force balance allows for focusing and compaction of suspended particulates into a narrow band for extraction. The separation principle contemplated herein implements a balance of the centrifugal and fluidic forces to achieve asymmetric inertial equilibrium near the inner sidewall. Angled impingement of the inlet stream towards the inner wall also allow for earlier band formation due to a Coanda effect where wall friction is used to attach the impinging flow. The migration could also be directed to the outer wall based on the selected operating regime.

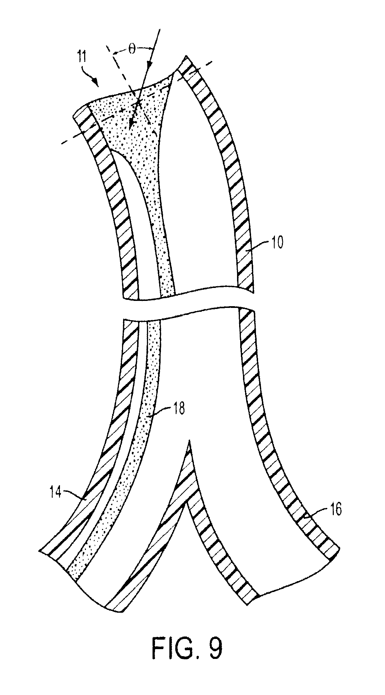

With reference to Figure 9, the channel 10 has an inlet 11 wherein the inlet stream is angled toward the inner wall by an angle $\theta$. The tubular band 18 is thus formed earlier for egress out of the outlet 14. Of course, the second outlet 16 for the remaining fluid in which the band 18 does not flow is also shown. It should be understood that the inlet angle may be realized using any suitable mechanism or technique. It should also be appreciated that only the inlet and outlet portions are shown in Figure 9.

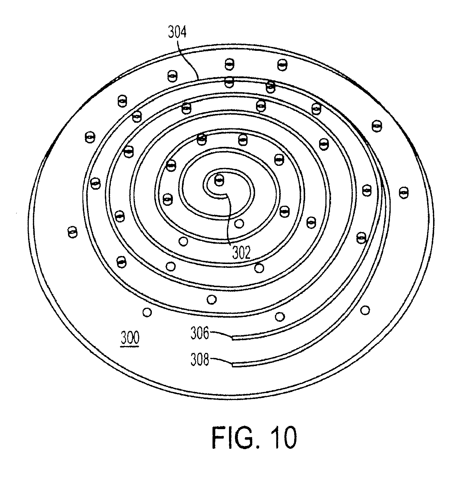

Figure 10 shows a spiral device 300 (which could operate as the spiral separator 112 or spiral mixer 108) having an inlet 302, a spiral channel 304 and outlets 306 and 308. Various configurations of a spiral device may be used, such as those described in the above-noted patent applications. In this regard, for example, it should also be appreciated that the inlet may be positioned on the outer circumference of the spiral or at the center (as shown in Figure 10), depending on the configuration. It should also be understood that the particle stream (such as the band 18 of Figure 9) may be directed through the second outlet 16 based on the selected operating regime.

Likewise, the spiral mixer 108 may take a variety of forms, including that described in U.S. Serial No. 11/936,753, filed on November 7, 2007, entitled "Device and Method for Dynamic Processing in Water Purification," which is incorporated herein by reference. In this regard, the spiral mixer may take a physical form substantially similar to that of a spiral separator, with some minor and/or functional modifications. So, with reference to Figure 9, the angle θ at which the fluid is received is tuned to create sufficient turbulence in the channel to mix, rather than separate, the particles of the fluid (as noted above). Also, as noted above, the growth of floc is controlled in the mixing state as a result of shear forces. The outlet may be separated, as shown, or a single unitary outlet.

In operation, with reference back to Figure 4, source water having particles therein is input into and received by the system 100 at a suitable inlet, mesh filtered and mixed with coagulant. This water is then received in a buffer tank 110 wherein a separate injection of mature floc, preferably at or above the cut-off size of the spiral separator 112, is made. In this regard, the spiral separator 112 is operative to segregate the source water into effluent and waste water streams or paths, wherein the waste water includes aggregated particles formed relatively quickly as a result of the injection of mature floc. Upon output from the spiral separator 112, the treated effluent is available for use while the waste fluid can be disposed of or simply recirculated for repeat use as mature floc.

The maturing of the floc and its benefits as described herein can be explained in terms of aggregations kinetics. Aggregation kinetics describes the evolution of aggregates of different sizes over time. If we assume an initial dispersion of identical particles (primary particles of size $a_0$), we can describe the time evolution of the number density $N_k$ of aggregates containing $k$ primary particles by

$$\frac{dN_k}{dt} = \frac{1}{\tau}\left\{\frac{1}{2}\sum_{i=1}^{k-1} K(i, k-i)N_i N_{k-i} - \sum_{i=1}^{x} K(i, k)N_i N_k\right\}. \tag{1}$$

where $\tau$ | is the characteristic time scale of the process and the kernel $K(i, j)$ denotes the efficiency with which particles of size $i$ and $j$ collide with each other. A particle of size i is an aggregate that consist of i primary particles. The number density $N_k$ is defined as the concentration of particles of size $k$ divided by the total concentration of particles at time $t=0$. The first term on the right hand side of (1) describes the formation of an aggregate of size $k$ through the collision of two smaller particles of sizes $i$ and $k-i$. The second term describes the loss of aggregates of size k through collisions with other aggregates. The collision kernels $K(i, j)$ depend on the physical driving force that brings the particles together.

For small (sub-micron) particles diffusion driven (perikinetic) aggregation dominates. For this type of kinetics, the collision frequency is determined by the rate with which two diffusing particles find each other and the collision kernel and time scale are given by

$$K(i, j) = \frac{\left(a_i^{1/3} + a_j^{1/3}\right)^2}{a_i^{1/3} a_j^{1/3}} \tag{2a}$$

$$\tau_P = \frac{3\eta}{2k_B T N_0}. \tag{2b}$$

Here, $a_i$ ($a_j$) is the radius of an aggregate of size $i$ ($j$). $k_B$ is the Boltzman factor, $T$ is absolute temperature, η is the viscosity of the fluid, and $N_0$ is the total initial particle number density.

Stirring of the colloidal suspension adds a shear induced (orthokinetic) aggregation kinetics. In this case, the collision frequency is calculated as the rate of particles of size $i$ that move through a circle with radius $a_i+a_j$, giving the collision kernel and time scale

$$K(i,j) = \left( \frac{a_i + a_j}{a_1} \right)^3 \qquad (3a)$$

$$\tau_O = \frac{3}{4\dot{\gamma}a_1^3 N_0} = \frac{\pi}{\dot{\gamma}\phi} \cdot \qquad (3b)$$

where $\dot{\gamma}$ is the shear rate, and $\phi$| is the solids volume fraction.

As can be seen from Eqn. (3b), the rate for orthokinetic aggregation increases with the size of the particles, and for a typical shear rate of 1/s exceeds the perikinetic aggregation rate for particles in excess of 1μm.

In a situation where a species of large particles (>1μm) is mixed together with small particles (<1μm), we observe two competing aggregation kinetics. The small particles will grow together at the perikinetic aggregation rate. At the same time, the larger particles will "sweep up" the smaller particles at the orthokinetic aggregation rate. The second process is described by

$$\frac{dN_s}{dt} = -\tau_O^{-1} \left( 1 + \frac{r_l}{r_s} \right)^3 N_s N_l = -\tau_{ls}^{-1} N_s . \qquad (4)$$

where $\tau_{ls} = \pi/\dot{\gamma}\phi_1$, and $\phi_l$| is the volume fraction of the larger particles. If we neglect aggregation between large particles (i.e. we assume $N_l$ to be constant), we can integrate Eqn (4) to obtain the number density for the smaller particles

$$N_s(t) = N_s(t=0)e^{-t/\tau_{ls}} . \qquad (5)$$

Here, the time scale $\tau_{ls}$| is independent of the size and/or concentration of the smaller particles, but solely given by the volume fraction of the larger particles and the stirring rate.

Table 1 shows typical time scales for perikinetic and orthokinetic aggregation. As expected, the perikinetic aggregation rate is faster for sub-micron particles. Since in this aggregation mode many particle-particle collisions have to occur before the aggregates reach a size for easy removal (i.e. before they are larger than a few μm), these aggregation times are very low bounds for the actual aggregation time required in a water treatment process.

| as [um] | Ns [NA] | tau_p [s] | tau_o [s] |
|---------|---------|-----------|-----------|
| 0.03 | 1.00E-03 | 6.02E-04 | 5.91E-01 |
| 0.03 | 1.00E-06 | 6.02E-01 | 5.91E+02 |
| 0.03 | 1.00E-09 | 6.02E+02 | 5.91E+05 |
| 0.3 | 1.00E-03 | 6.02E-04 | 5.91E-04 |
| 0.3 | 1.00E-06 | 6.02E-01 | 5.91E-01 |

(continued)

| as [um] | Ns [NA] | tau_p [s] | tau_o [s] |
|---------|---------|-----------|-----------|
| 0.3 | 1.00E-09 | 6.02E+02 | 5.91E+02 |

Table 2 shows typical time scales for "sweep" aggregation for different sizes and concentrations of the sweep particles. Even at low concentrations of the sweep particles, time scales are comparable to those of perikinetic aggregation. Combined with the fact that in sweep mode a single collision of a small particle with a large one results in an aggregate that is easily separated out, this results in a much higher removal efficiency for sweep mode aggregation.

| al [um] | Nl [NA] | tau_l [s] |
|---------|---------|-----------|
| 3 | 1.00E-03 | 5.91E-07 |
| 3 | 1.00E-06 | 5.91E-04 |
| 3 | 1.00E-09 | 5.91E-01 |
| 30 | 1.00E-03 | 5.92E-10 |
| 30 | 1.00E-05 | 5.91E-07 |
| 30 | 1.00E-09 | 5.91E-04 |

Two sets of experiments were performed to validate the presently described embodiments: (1) Jar Test; and (2) in-line floc separation.

**Jar Test** -- the Jar Test is a standard method used in the water industry to determine chemical dosage for clarification of source waters. Typical test volumes are 2L with determined dosage being scaled up for the operational flow rates. The protocol for a standard Jar Test includes:

[0057] - 2 minute rapid mix;

[0058] - 2.3 ml of 1 N NaOH (as base) and 110 mg/L of 1% Alum (as coagulant) added to source water with starting turbidity of 26 NTU;

[0059] - 28 minutes slow mix; and,

[0060] - Mixing stopped at 30 min and flocs allowed to settle out.

[0061] A modified Jar Test Protocol to test the presently described embodiments includes:

[0062] - 2 minute rapid mix;

[0063] - 2.3 ml of 1 N NaOH (as base) and 110 mg/L of 1% Alum (as coagulant) added to source water with starting turbidity of 26 NTU;

[0064] - 28 minutes slow mix; and,

[0065] - First batch of 30 min floc added at 2 min (100 ml) and second batch is added at 6 min (50 ml). All flocs are injected in the slow mixing regime. A total of 150 ml of 30 min flocs are added to the jar; and,

[0066] - Mixing stopped at 30 min and flocs allowed to settle.

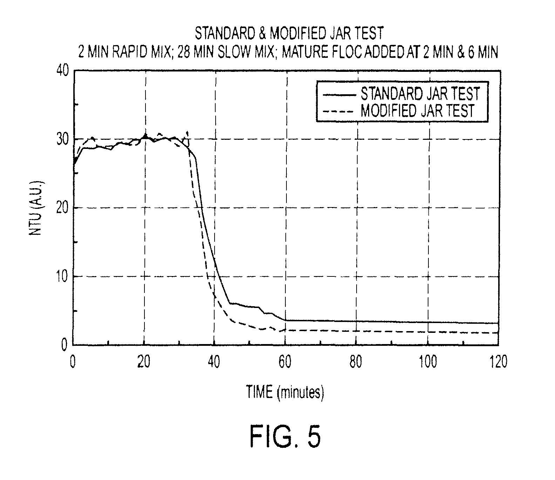

Figure 5 shows the measured turbidity reduction as a function of time for the modified and standard Jar Test experiments. The steeper fall-off of the curve for the modified Jar Test immediately after mixing is stopped at 30 mins shows more rapid aggregation and sedimentation. The asymptotic value of turbidity is also a couple of NTU lower showing more efficient turbidity reduction.

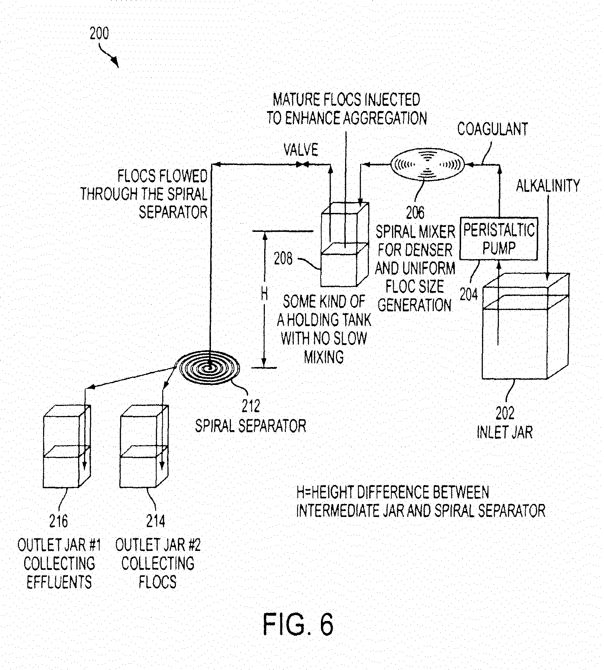

**In-line Floc Separation** - The schematic for in-line floc separation is shown in Figure 6. With reference to the system 200, starting from the right, 1 N NaOH is added to the input water from input jar 202 and is pumped by a pump 204 through a spiral mixer 200 into a second buffer tank 208. Coagulant is injected just before the spiral mixer to promote faster agglomeration and to produce uniformly sized floc. More mature 30 minute floc is injected into the buffer tank to act as seed for more rapid aggregation. A total of 150 ml of 30 min flocs are added to the tank The water is then flowed through the spiral separator 212, which is located at a height H below the second buffer tank 208. This gravity-driven flow allows operation without pumping. The fluid is separated and collected into effluent and waste streams and held in effluent jar 216 and floc collection jar 214. NTU measurements are performed on the collected effluent and waste streams over time to determine turbidity reduction. A buffer time of 4 minutes is used to allow for fluid impedance matching between the mixer and the separator.

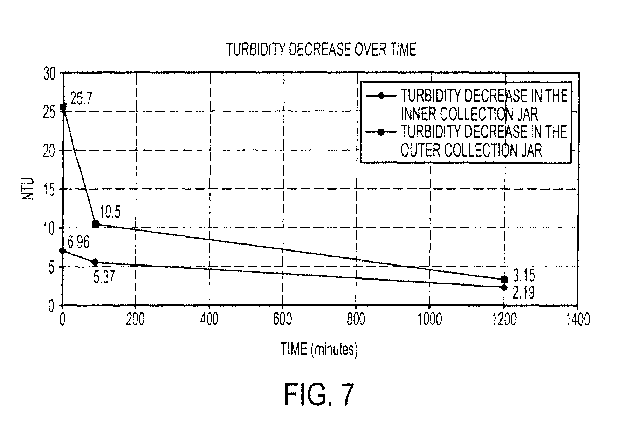

Measured turbidity in the collected effluent and waste streams for 4 minute floc are shown in Figure 7. The waste stream (top curve) shows initially high turbidity which drops to the asymptotic value as flocs sediment out of the liquid. The effluent stream (bottom curve) shows much lower starting turbidity which also continues to drop to the asymptotic value. The ideal curve should be a flat line of much lower turbidity (compared to that of the waste stream) if all the flocs are removed by the spiral separator. This curve shows a small amount of tiny floc, below cut-off separation, which gets into the effluent stream and continue to mature and sediment out. More work can be performed to optimize both dosage and injection rate to result in the desired flat line behavior.

Additional experiments were performed to demonstrate separation of both 30 minute and 4 minute floc. A setup where 30 minute floc was separated using gravity by placing the flocs on the shelf some 4 feet above the plane of the spiral separator was conducted. The collected effluent was clear compared to that of the waste stream. Comparisons of separated and collected effluent and waste streams for both 30 minute and 4 minute flocs shows that collected effluent is clearer using 30 minute floc. Table 3 summarizes the comparison of process times for conventional water treatment compared to the proposed spiral system.

| Step | Conv. Process Time (min) | Spiral Process Time (min) |
|---|---|---|
| Flash Mix | 0.5 | 0.083 |
| Flocculation (slow mix) | 30.0 | 4.0 |
| Sedimentation/Separation | 600.0 | 10.0 |

Particle concentrations for range of particles sizes for seeded and unseeded cases are shown. The seeded case results in lower concentrations of small particles due to enhanced aggregation with larger seed particles. The seeded case also shows a peak in the 25-30um rang; indicating the average size of flocs immediately after mixing is stopped.

By assuming that NTU is proportional to volume fraction and that shear induced motion is dominant to sedimentation during mixing, we can infer that particles will not sediment if $t_{sed} > t_{mix}$ This gives a criterion for the largest particle to stay in solution during mixing:

$$r_{max} = \frac{9\eta}{2\Delta\rho g} G = \alpha G \qquad (6)$$

where G is the shear rate and $\Delta\rho$ is the difference between the particle and water density. Parameter $\alpha|$ is estimated from empirical data in the time interval between the end of mixing and the first NTU measurement. The volume fraction is given by:

$$\phi(t) = \int_0^{R(t)} dr \frac{4\pi r^3}{3} \frac{3r^2}{r_0^3} N(r) \qquad (7)$$

Particle size as a function of time, R(t), decreases as particles sediment, and is derived as:

$$R(t) = \sqrt{\frac{\alpha H}{t}} \qquad (8)$$

The corresponding particle density is estimated as:

$$N\left( r = \sqrt{\frac{\alpha H}{t}} \right) = -\frac{d\phi}{dt} \frac{t^4}{2\pi} \left( \frac{r_0}{\alpha H} \right)^3 \Bigg| \tag{9}$$

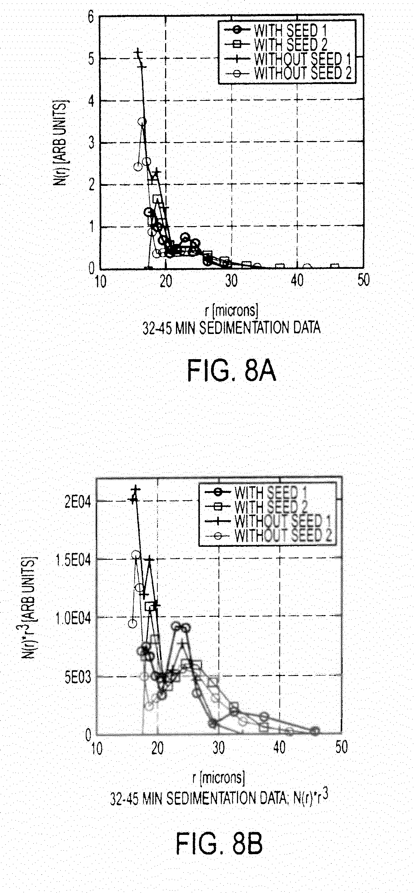

The particle size distributions extracted from fit to empirical data in the 32-45 min time interval is shown in Figure 8 for two sets of repeated experiments comparing injection of seed particles with a standard Jar Test. Comparing the "seeded" cases against the "standard", we see that there are fewer small particles in the "seeded" cases due to aggregation with larger particles. The distinct peak of "seeded" cases at 25 $\mu$m indicates the nominal size of particles at the end of mixing. The right graph is weighted by multiplying with particle volume to highlight that most of the particulate matter of the source water is now captured as [AV1]larger aggregates.

The presently described embodiments result in at least the following advantages:

X In-line coagulation, flocculation, and separation water treatment system without flocculation and sedimentation basins and much reduced process time

X Injection of mature floc to seed and accelerate particle aggregation for floc formation

X Mature floc may be prepared off-line and injected into the buffer tank on demand

X More mature floc may also be re-circulated from downstream for injection into the buffer tank as needed

X No need to recover seed particles

X No additional pumping equipment or power for seed recovery

X Coagulant used for mature floc off-set by up to 50% reduction in coagulant dosage

X Seeding is also relevant for other applications to accelerate aggregation

It will be appreciated that several of the above-disclosed and other features and functions, or alternatives thereof, may be desirably combined into many other different systems or applications.

1. A system for treatment of water, the system comprising:

an inlet operative to receive source water having particles therein;
a mixer operative to mix the source water with coagulant and alkalinity material;
a buffer tank operative to receive an output of the mixer and receive mature floc, wherein
the mature floc is operative to promote aggregation of particles in the source water;
a spiral separator operative to segregate contents of the buffer tank into effluent and
waste water having aggregated particles therein; and,
an outlet operative to provide a first path for the effluent and a second path for the waste water having aggregated particles.

2. The system as set forth in embodiment 1 wherein the inlet comprises a mesh filter.

3. The system as set forth in embodiment 1 wherein the mixer is a spiral mixer.

4. The system as set forth in embodiment 1 further comprising a tank for forming the mature floc.

5. The system as set forth in embodiment 1 wherein the age of the mature floc is minimized to allow optimal aggregation of small particles which is controlled by both size and concentration of the aged floc.

6. The system as set forth in embodiment 1 further comprising a feedback line between the second path and the buffer tank.

7. The system as set forth in embodiment 1 further comprising a filter device operative to receive and filter the effluent.

8. A method for treatment of water, the method comprising:

receiving source water having particles therein;
adding alkalinity to set water pH;
mixing the source water with coagulant material;
injecting mature floc into the mixture of the source water and the coagulant material, the mature floc promoting aggregation of the particles in the source water; and,
separating the source water into effluent and waste water having aggregated particles.

9. The method as set forth in embodiment 8 wherein the mixing is spiral mixing.

10. The method as set forth in embodiment 8 wherein the mature floc is injected from a tank wherein the mature floc is generated.

11. The method as set forth in embodiment 8 wherein the separating is spiral separating.

12. The method as set forth in embodiment 8 further comprising feeding the waste water back to be injected as mature floc in the injecting step.

13. A system for treatment of water, the system comprising:

means for receiving source water having particles therein;
means for mixing the source water with coagulant material;
means for injecting mature floc into the mixture of the source water and the coagulant material, the mature floc promoting aggregation of the particles in the source water; and,
means for separating the source water into effluent and waste water having aggregated particles.

14. The system as set forth in embodiment 13 wherein the means for mixing is spiral mixer.

15. The system as set forth in embodiment 13 wherein the mature floc is injected from a tank wherein the mature floc is generated.

**Claims**

1. A system for treatment of water, the system comprising:

means for receiving source water having particles therein;
means for mixing the source water with coagulant material;
means for separating the source water into effluent and waste water having aggregated particles, and
means for injecting mature floc into the mixture of the source water and the coagulant material, the mature floc promoting aggregation of the particles in the source water;
wherein the injected mature floc have a size above a cut-off size of means for separating.

2. The system as set forth in claim 1, wherein the means for mixing is a spiral mixer.

3. The system as set forth in claim 1, wherein the mature floc is injected from a tank wherein the mature floc is generated.

4. The system as set forth in claim 1, wherein the means for separating is a spiral separator.

5. The system as set forth in claim 1, wherein the system is adapted to inject 30-Min mature floc.

6. The system as set forth in claim 1, further comprising means for feeding the waste water back to the means for injecting to be injected as mature floc.

7. The system as set forth in claim 1, wherein the separating is based on a balance of centrifugal forces and pressure-driven or fluidic forces of a flow of the source water through a curved channel.

8. The system as set forth in claim 1, wherein means for mixing is operative to mix the source water with coagulant and alkalinity material.

9. The system as set forth in claim 3, wherein the tank is operative to receive an output of the mixer and receive mature floc.

10. A method for treatment of water, the method comprising:

receiving source water having particles therein;
mixing the source water with coagulant material;
separating the source water into effluent and waste water having aggregated particles, and
injecting mature floc into the mixture of the source water and the coagulant material, the mature floc promoting aggregation of the particles in the source water;
wherein the injected mature floc have a size above a cut-off size of means for separating.

11. The method as set forth in claim 10, wherein the mature floc is injected from a tank wherein the mature floc is generated.

12. The method as set forth in claim 10, further comprising feeding the waste water back to the means for injecting to be injected as mature floc.

13. The method as set forth in claim 10, wherein the separating is based on a balance of centrifugal forces and pressure-driven or fluidic forces of a flow of the source water through a curved channel.

14. The method as set forth in claim 10, wherein for mixing is operative to mix the source water with coagulant and alkalinity material.

15. The method as set forth in claim 11, wherein the tank is operative to receive an output of the mixer and receive mature floc.

FIG. 1

FIG. 2

72 SLUDGE

74

70
MICRO-SAND
AND SLUDGE

50

58 MICRO-SAND

FIG. 3

FIG. 4

STANDARD & MODIFIED JAR TEST
2 MIN RAPID MIX; 28 MIN SLOW MIX; MATURE FLOC ADDED AT 2 MIN & 6 MIN

FIG. 5

200

MATURE FLOCS INJECTED
TO ENHANCE AGGREGATION

COAGULANT

VALVE

FLOCS FLOWED
THROUGH THE SPIRAL
SEPARATOR

ALKALINITY

208

206
SPIRAL MIXER
FOR DENSER
AND UNIFORM
FLOC SIZE
GENERATION

PERISTALTIC
PUMP

204

H

SOME KIND OF
A HOLDING TANK
WITH NO SLOW
MIXING

212
SPIRAL SEPARATOR

202
INLET JAR

H=HEIGHT DIFFERENCE BETWEEN
INTERMEDIATE JAR AND SPIRAL SEPARATOR

216
OUTLET JAR #1
COLLECTING
EFFLUENTS

214
OUTLET JAR #2
COLLECTING
FLOCS

FIG. 6

TURBIDITY DECREASE OVER TIME

FIG. 7

32-45 MIN SEDIMENTATION DATA

FIG. 8A

32-45 MIN SEDIMENTATION DATA; N(r)*r³

FIG. 8B

FIG. 9

FIG. 10

Europäisches
Patentamt

European
Patent Office

Office européen
des brevets

**EUROPEAN SEARCH REPORT**

Application Number

EP 12 19 0390

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 89/01357 A1 (GOLCONDA ENG & MINING [AU]) 23 February 1989 (1989-02-23) <br> * figure 1 * <br> * claims 1-12 * <br> * page 7, line 15 - page 8, line 20 * <br> ----- | 1-15 | INV. <br> C02F1/52 <br> C02F9/00 <br> C02F1/66 <br> C02F1/56 <br> C02F1/38 |
| A | WO 2004/103916 A1 (CDS TECHNOLOGIES INC [US]; HEIST JAMES A [US]; DAVEY ALEX [US]; FITZGE) 2 December 2004 (2004-12-02) <br> * figures 3,4 * <br> * claims 1-24 * <br> ----- | 1-15 | C02F1/00 <br> B01D21/26 |
| A,D | EP 1 942 329 A2 (PALO ALTO RES CT INC [US]) 9 July 2008 (2008-07-09) <br> * the whole document * <br> ----- | 1-15 | |

TECHNICAL FIELDS
SEARCHED (IPC)

C02F

The present search report has been drawn up for all claims

| Place of search | Date of completion of the search | Examiner |
|---|---|---|
| Munich | 9 April 2013 | Galiana López, Paula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 12 19 0390

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2013

| Patent document cited in search report | | Publication date | Patent family member(s) | | Publication date |
|---|---|---|---|---|---|
| WO 8901357 | A1 | 23-02-1989 | CA | 1336020 C | 20-06-1995 |
| | | | DE | 3884956 D1 | 18-11-1993 |
| | | | DE | 3884956 T2 | 11-05-1994 |
| | | | EP | 0377603 A1 | 18-07-1990 |
| | | | NZ | 225853 A | 26-04-1991 |
| | | | US | 4997573 A | 05-03-1991 |
| | | | WO | 8901357 A1 | 23-02-1989 |
| WO 2004103916 | A1 | 02-12-2004 | US | 2005167372 A1 | 04-08-2005 |
| | | | WO | 2004103916 A1 | 02-12-2004 |
| EP 1942329 | A2 | 09-07-2008 | EP | 1942329 A2 | 09-07-2008 |
| | | | EP | 2378266 A1 | 19-10-2011 |
| | | | EP | 2378267 A1 | 19-10-2011 |
| | | | EP | 2378268 A1 | 19-10-2011 |
| | | | EP | 2378269 A1 | 19-10-2011 |
| | | | EP | 2381238 A1 | 26-10-2011 |
| | | | JP | 2008137003 A | 19-06-2008 |
| | | | JP | 2012071309 A | 12-04-2012 |
| | | | US | 2008128331 A1 | 05-06-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080128331 A1
- US 11606460 B
- US 111936729 B
- US 11936753 B